(19) Europäisches Patentamt
European Patent Office
Office européen des brevets

(11) **EP 3 689 977 A1**

(12) **EUROPEAN PATENT APPLICATION**
published in accordance with Art. 153(4) EPC

(43) Date of publication:
**05.08.2020 Bulletin 2020/32**

(21) Application number: **18862107.2**

(22) Date of filing: **14.09.2018**

(51) Int Cl.:
$C09D\ 4/02^{(2006.01)}$    $C03C\ 17/32^{(2006.01)}$
$C09C\ 1/62^{(2006.01)}$    $C09D\ 7/62^{(2018.01)}$
$C09D\ 163/06^{(2006.01)}$

(86) International application number:
**PCT/JP2018/034250**

(87) International publication number:
**WO 2019/065316 (04.04.2019 Gazette 2019/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2017 JP 2017191026**

(71) Applicant: **Nippon Paint Holdings Co., Ltd.
Osaka-shi, Osaka 531-8511 (JP)**

(72) Inventors:
• **MIYANISHI, Hiroki
Tokyo 140-8675 (JP)**

• **SUZUKI, Hiroyuki
Tokyo 140-8675 (JP)**
• **ONISHI, Isamu
Tokyo 140-8675 (JP)**
• **FUJITA, Takeshi
Tokyo 140-8675 (JP)**

(74) Representative: **Scott, Stephen John
YUJA Limited
Suite 4, Level 6
Broad Gate
22-26 The Headrow
Leeds LS1 8EQ (GB)**

(54) **COATING COMPOSITION AND COATING FILM**

(57)    Provided is a coating composition that is capable of forming a coating film having excellent infrared light reflectance and visible light transparency, and also having low haze. The coating composition contains flat pigment particles (1), a resin component, and a curing agent. The flat pigment particles (1) include a laminate (10) of dielectric layers (11) and a metal thin film layer (12). The dielectric layers (11) and the metal thin film layer (12) are layered alternately in the laminate (10) and the dielectric layers (11) are located outermost in the laminate (10). The resin component includes at least one selected from the group consisting of tris(2-acryloyloxyethyl) isocyanurate, 2-hydroxyethylbis(2-acryloyloxyethyl) isocyanurate, 1,3,5-triacryloylhexahydro-1,3,5-triazine, and triglycidyl isocyanurate.

*FIG. 1*

**Description**

TECHNICAL FIELD

The present disclosure relates to a coating composition and a coating film.

BACKGROUND

In recent years, infrared reflective pigments and infrared reflective coating compositions have been proposed that can impart heat shielding properties to building roofs and roads, and that can also be adopted in applications where there is demand for aesthetic design, such as for automobile bodies (for example, refer to Patent Literature (PTL) 1).

CITATION LIST

Patent Literature

PTL 1: WO 2016/006664 A1

SUMMARY

(Technical Problem)

On the other hand, demand has recently been growing for haze reduction of coating films from a viewpoint of improving coating film external appearance. In response to this demand, the inventors studied infrared reflective pigments and infrared reflective coating compositions such as described above and found that although coating films formed using these materials have excellent infrared light reflectance and visible light transparency, there is room for improvement in terms of haze.

Accordingly, one objective of the present disclosure is to solve the problem relating the conventional technique described above and to provide a coating composition that is capable of forming a coating film having excellent infrared light reflectance and visible light transparency, and also having low haze.

Another objective of the present disclosure is to provide a coating film having excellent infrared light reflectance and visible light transparency, and also having low haze.

(Solution to Problem)

Primary features of the present disclosure for solving the problem set forth above are as follows.

A presently disclosed coating composition comprises flat pigment particles, a resin component, and a curing agent, wherein
the flat pigment particles include a laminate of dielectric layers and a metal thin film layer,
the dielectric layers and the metal thin film layer are layered alternately in the laminate and the dielectric layers are located outermost in the laminate, and
the resin component includes at least one selected from the group consisting of tris(2-acryloyloxyethyl) isocyanurate, 2-hydroxyethylbis(2-acryloyloxyethyl) isocyanurate, 1,3,5-triacryloylhexahydro-1,3,5-triazine, and triglycidyl isocyanurate.

The presently disclosed coating composition set forth above can form a coating film having excellent infrared light reflectance and visible light transparency, and also having low haze.

In a preferred example of the presently disclosed coating composition, a ratio of mass of the flat pigment particles and total mass of the resin component and the curing agent is 0.5:99.5 to 15:85. In this case, a coating film having even lower haze can be formed while also further improving infrared light reflectance and visible light transparency.

In a preferred example of the presently disclosed coating composition, the curing agent is at least one selected from the group consisting of 1-hydroxycyclohexyl phenyl ketone, 2-hydroxy-2-methyl-1-phenylpropan-1-one, 2-methyl-1-(4-methylthiophenyl)-2-morpholinopropan-1-one, 2,4,6-trimethylbenzoyldiphenylphosphine oxide, bis(2,4,6-trimethylbenzoyl)phenylphosphine oxide, 2-(dimethylamino)-2-[(4-methylphenyl)methyl]-1-[4-(4-morpholinyl)phenyl]-1-butanone, α-cumyl peroxyneodecanoate, and 2-methyl-2-[(4-methylphenyl)sulfonyl]-1-[4-(methylthio)phenyl]-1-propanone.

Moreover, a presently disclosed coating film comprises flat pigment particles, a resin component, and a curing agent, wherein
the flat pigment particles include a laminate of dielectric layers and a metal thin film layer,

the dielectric layers and the metal thin film layer are layered alternately in the laminate and the dielectric layers are located outermost in the laminate, and

the resin component includes at least one selected from the group consisting of tris(2-acryloyloxyethyl) isocyanurate, 2-hydroxyethylbis(2-acryloyloxyethyl) isocyanurate, 1,3,5-triacryloylhexahydro-1,3,5-triazine, and triglycidyl isocyanurate.

The presently disclosed coating film set forth above has excellent infrared light reflectance and visible light transparency, and also has low haze.

In a preferred example of the presently disclosed coating film, the coating film has a film thickness of 3 μm to 50 μm. In this case, haze of the coating film can be further reduced.

In a preferred example of the presently disclosed coating film, the curing agent is at least one selected from the group consisting of 1-hydroxycyclohexyl phenyl ketone, 2-hydroxy-2-methyl-1-phenylpropan-1-one, 2-methyl-1-(4-methylthiophenyl)-2-morpholinopropan-1-one, 2,4,6-trimethylbenzoyldiphenylphosphine oxide, bis(2,4,6-trimethylbenzoyl)phenylphosphine oxide, 2-(dimethylamino)-2-[(4-methylphenyl)methyl]-1-[4-(4-morpholinyl)phenyl]-1-butanone, α-cumyl peroxyneodecanoate, and 2-methyl-2-[(4-methylphenyl)sulfonyl]-1-[4-(methylthio)phenyl]-1-propanon e.

(Advantageous Effect)

According to the present disclosure, it is possible to provide a coating composition that is capable of forming a coating film having excellent infrared light reflectance and visible light transparency, and also having low haze.

Moreover, according to the present disclosure, it is possible to provide a coating film having excellent infrared light reflectance and visible light transparency, and also having low haze.

BRIEF DESCRIPTION OF THE DRAWINGS

In the accompanying drawings:

FIG. 1 is a schematic view illustrating one example of configuration of a flat pigment particle;
FIG. 2 is a schematic view illustrating another example of configuration of a flat pigment particle;
FIG. 3 is a schematic view illustrating yet another example of configuration of a flat pigment particle;
FIG. 4 is a schematic view illustrating one example of a flat pigment particle having a surface tension adjustment layer;
FIG. 5 is a schematic view illustrating one example of a method of producing flat pigment particles; and
FIG. 6 is a schematic view illustrating another example of a method of producing flat pigment particles.

DETAILED DESCRIPTION

The following provides detailed, illustrative descriptions of the presently disclosed coating composition and coating film based on embodiments thereof. These descriptions are for illustrative purposes only and are not to be construed to limit the scope of the present disclosure.

Also note that two or more of the embodiments may be freely combined.

The term "flat pigment particles" as used in the present disclosure refers to individual flat plates or a roughly flat plate-shaped substance forming a pigment.

Moreover, the thicknesses of a coating film and various layers referred to in the present disclosure represent "film thicknesses". With the exception of "optical film thickness", the terms "film thickness" and "dry film thickness" refer to physical film thickness, unless otherwise specified.

The term "visible light region" as used in the present disclosure refers to a wavelength range of 380 nm to 780 nm. Moreover, the term "region around visible light" refers to wavelengths of 180 nm to 980 nm. Furthermore, "infrared light wavelength region" refers to a range of 780 nm to 2,500 nm, whereas "radio wave wavelength region" refers to a range of 0.1 mm to 10 km.

(Coating composition)

The presently disclosed coating composition contains flat pigment particles, a resin component, and a curing agent. However, it should be noted that the coating composition may also contain other components besides the flat pigment particles, the resin component, and the curing agent.

<Flat pigment particles>

The flat pigment particles act to impart infrared light reflectance and visible light transparency to a coating film.

The flat pigment particles include a laminate of dielectric layers and a metal thin film layer. The dielectric layers and the metal thin film layer are layered alternately in the laminate and the dielectric layers are located outermost in the laminate. Hereinafter, the term "laminate" refers to a laminate in which dielectric layers and a metal thin film layer are layered alternately and in which the dielectric layers are located outermost.

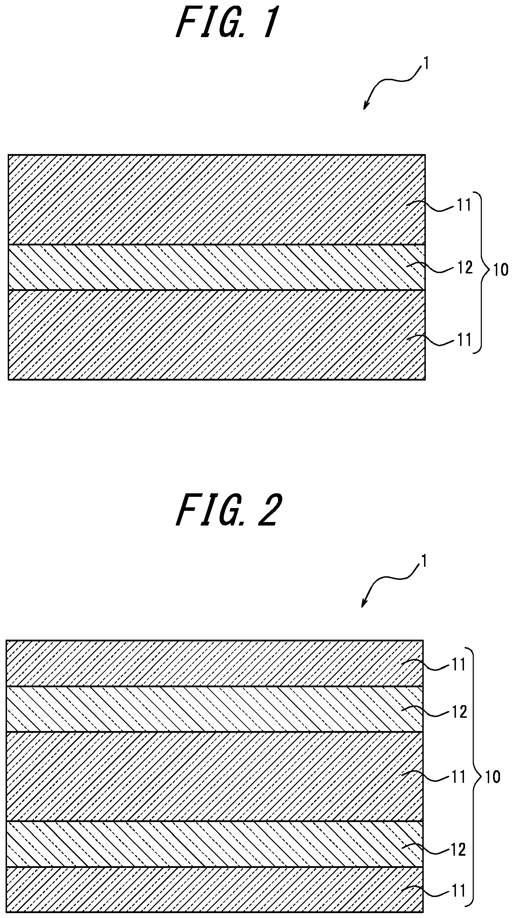

FIG. 1 is a schematic view illustrating one example of configuration of a flat pigment particle. A flat pigment particle 1 illustrated in FIG. 1 is composed of a laminate 10 including two dielectric layers 11 and one metal thin film layer 12. As illustrated in FIG. 1, a dielectric layer 11, a metal thin film layer 12, and a dielectric layer 11 are layered alternately, adjacently to one another, in this order. The laminate 10 illustrated in FIG. 1 is a laminate that is composed of a minimum number of constituent elements. Moreover, the two dielectric layers 11 in the laminate 10 illustrated in FIG. 1 have the same film thickness.

FIG. 2 is a schematic view illustrating another example of configuration of a flat pigment particle. A flat pigment particle 1 illustrated in FIG. 2 is composed of a laminate 10 including three dielectric layers 11 and two metal thin film layers 12. In the laminate 10 illustrated in FIG. 2, two dielectric layers 11 that are outermost layers have the same film thickness, whereas a dielectric layer 11 that is an innermost layer has a larger film thickness than the dielectric layers 11 that are outermost layers. Moreover, the two metal thin film layers 12 have the same film thickness. It should be noted that in the present disclosure, a dielectric layer that is an innermost layer may have a smaller film thickness than dielectric layers that are outermost layers or may have the same film thickness as dielectric layers that are outermost layers.

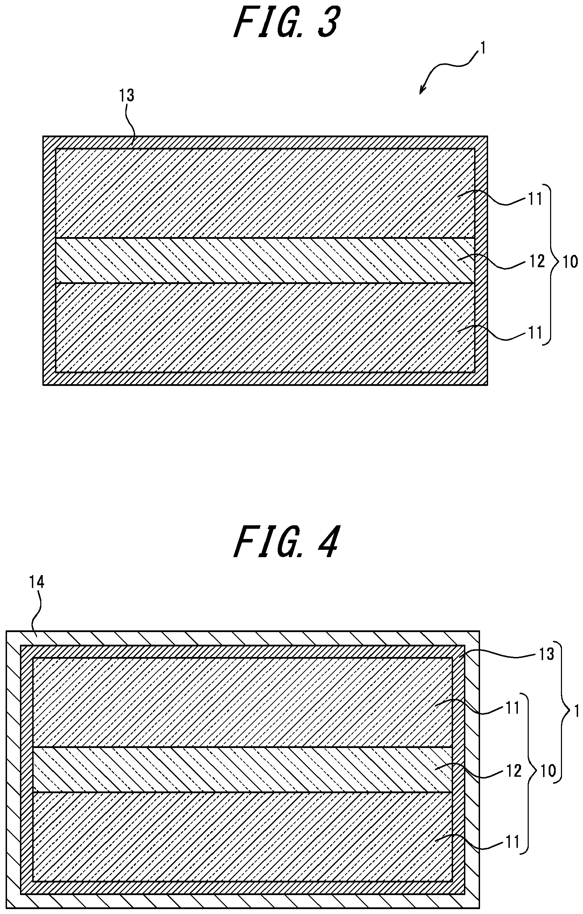

FIG. 3 is a schematic view illustrating yet another example of configuration of a flat pigment particle. A flat pigment particle 1 illustrated in FIG. 3 has a surface-treatment layer 13 at the surface of the laminate 10 illustrated in FIG. 1. The surface-treatment layer 13 is a constituent of the flat pigment particle 1 but is not included in the laminate 10.

FIG. 4 is a schematic view illustrating an example of a flat pigment particle having a surface tension adjustment layer. A flat pigment particle 1 illustrated in FIG. 4 has a surface tension adjustment layer 14 at the surface of the flat pigment particle 1 illustrated in FIG. 3. The surface tension adjustment layer 14 is not included in the flat pigment particle 1.

In consideration that dielectric layers and a metal thin film layer are layered alternately and that the dielectric layers are located outermost in the laminate, the number of layers in the laminate is at least 3 and may alternatively be another odd number such as 5, 7, or 9. In one embodiment, the number of layers in the laminate is 3 or 5. Also note that since dielectric layers and a metal thin film layer are layered alternately in the laminate, the dielectric layers and the metal thin film layer are adjacent.

So long as dielectric layers and a metal thin film layer are layered alternately and the dielectric layers are located outermost in the laminate as described above, laminates (flat pigment particles) that are the same in terms of the types (chemical compositions), film thicknesses, and number of layers in the laminate may be used, or laminates (flat pigment particles) that differ in terms of the above points may be used in combination. For example, a flat pigment particle in which the laminate includes three layers (two dielectric layers and one metal thin film layer) and a flat pigment particle in which the laminate includes five layers (three dielectric layers and two metal thin film layers) may be used in combination.

The thickness of the laminate may be adjusted as appropriate in consideration of infrared light reflectance and visible light transparency through the dielectric layer and the metal thin film layer that are described further below, electromagnetic wave wavelength regions that are targets thereof, and so forth. The average thickness of the laminate can be set as 30 nm to 150 nm, for example. In one embodiment, the average thickness of the laminate is 30 nm to 115 nm. In another embodiment, the average thickness of the laminate is 50 nm to 100 nm. In yet another embodiment, the laminate includes three layers and the average thickness of the laminate is 30 nm to 100 nm. In yet another embodiment, the laminate includes five layers and the average thickness of the laminate is 50 nm to 150 nm. The average thickness of the laminate can be determined by the method of measuring the average thickness of the flat pigment particles described further below.

The average thickness of the laminate is preferably smaller than the wavelength of visible light (380 nm to 780 nm) from a viewpoint of reducing haze of a coating film. Moreover, from this viewpoint, the average thickness of the laminate is preferably not more than half of the wavelength of visible light, preferably 115 nm or less, more preferably 100 nm or less, and even more preferably 80 nm or less.

The following provides illustrative descriptions of a dielectric layer, a metal thin film layer, and an optional surface-treatment layer of the flat pigment particles.

<Dielectric layer>

The dielectric layer functions as an antireflection layer for the metal thin film layer in the region around visible light. In other words, the dielectric layer has a function of improving transmittance of incident light that is in the region around visible light. The dielectric layer imparts excellent visible light transparency to a coating film containing the flat pigment particles.

The material of the dielectric layer can be a conventional, publicly known dielectric layer material. Examples of the material of the dielectric layer include titanium dioxide, zinc oxide, aluminum oxide, zirconium oxide ($ZrO$, $ZrO_2$),

silicon dioxide, tin(IV) oxide ($SnO_2$), tin-doped indium oxide (ITO), antimony-doped tin oxide (ATO), niobium pentoxide ($Nb_2O_5$), and cerium oxide ($CeO_2$). The material of the dielectric layer may be one of the above-described materials used individually or two or more of the above-described materials used in combination.

In one preferred embodiment, the material of the dielectric layer is at least one selected from the group consisting of tin-doped indium oxide, zinc oxide, titanium oxide, tin(IV) oxide, niobium pentoxide, cerium oxide, and zirconium oxide.

The film thickness of the dielectric layer may, in consideration of the refractive index of the dielectric layer and the refractive index of the metal thin film layer, be set as appropriate within a range that can exploit light interference to increase visible light transparency. For example, when the wavelength of incident light in the region around visible light is taken to be λ and the refractive index of the dielectric layer is taken to be n, the film thickness of the dielectric layer is preferably (integer multiple of λ/4n) ± 10 nm as described in PTL 1. The integer of the aforementioned "integer multiple" is preferably an integer of 1 to 4 from a viewpoint of visible light transmittance.

Note that the "refractive index n" referred to in the present disclosure can be determined by ellipsometry. Specifically, the "refractive index n" is taken to be a value measured at a temperature of 25 °C using an ellipsometer produced by Horiba, Ltd. or J.A. Woollam Japan.

The refractive index of the dielectric layer is, for example, 2.3 in the case of titanium dioxide ($TiO_2$), 1.83 in the case of zinc oxide (ZnO), 1.9 in the case of tin-doped indium oxide (ITO), 2.3 in the case of niobium pentoxide ($Nb_2O_5$), 2.2 in the case of cerium oxide ($CeO_2$), or 2.2 in the case of zirconium oxide (ZrO, $ZrO_2$). In one embodiment, the refractive index of the dielectric layer in the laminate is higher than the refractive index of the metal thin film layer in the laminate.

The film thickness of the dielectric layer is 10 nm or more in one embodiment, 15 nm or more in another embodiment, 18 nm or more in yet another embodiment, 20 nm or more in yet another embodiment, 30 nm or more in yet another embodiment, 32.5 nm or more in yet another embodiment, and 35 nm or more in yet another embodiment, and is 80 nm or less in one embodiment, 50 nm or less in another embodiment, 40 nm or less in yet another embodiment, and 36 nm or less in yet another embodiment.

In the present disclosure, at least two dielectric layers are present in order that dielectric layers are located outermost in the laminate. The material and thickness of each of the dielectric layers may be the same or different.

<Metal thin film layer>

The metal thin film layer has a function of reflecting infrared light. The metal thin film layer imparts excellent infrared light reflectance to a coating film containing the flat pigment particles.

The material of the metal thin film layer can be a conventional, publicly known material of a metal thin film layer or infrared reflecting layer. Examples of the material of the metal thin film layer include silver, silver compounds, aluminum, copper, gold, palladium, zinc, titanium, chromium, and silicon. The material of the metal thin film layer may be one of the above-described materials used individually or two or more of the above-described materials used in combination. The term "silver compound" refers to a silver compound containing silver as a main component (for example, 50 mass% or more of the chemical composition). Examples of silver compounds that can be used include a silver-indium-based alloy, a silver-gold-based alloy, and a silver-palladium-gold-based alloy.

In one preferred embodiment, the material of the metal thin film layer is at least one selected from the group consisting of silver, a silver compound, aluminum, zinc, and titanium.

The film thickness of the metal thin film layer may, in consideration of the refractive index of the dielectric layer and the refractive index of the metal thin film layer, be set as appropriate within a range that enables increased infrared light reflectance. For example, the film thickness of the metal thin film layer can be 5 nm to 20 nm. The film thickness of the metal thin film layer is 5 nm or more in one embodiment, 8 nm or more in another embodiment, and 10 nm or more in yet another embodiment, and is 20 nm or less in one embodiment, 15 nm or less in another embodiment, and 14 nm or less in yet another embodiment. Visible light transparency of a coating film increases when the film thickness of the metal thin film layer is 20 nm or less, whereas infrared light reflectance of a coating film increases when the film thickness of the metal thin film layer is 5 nm or more.

In a case in which two or more metal thin film layers are included, the material and film thickness of each of the metal thin film layers may be the same or different.

<Surface-treatment layer>

The flat pigment particles may optionally have a surface-treatment layer at the surface of the laminate as illustrated in FIG. 3. The surface-treatment layer has a function of inhibiting degradation of the laminate in a coating film caused by, for example, the subsequently described resin component coming into contact with a dielectric layer or metal thin film layer including an end part of the laminate and causing oxidation. This can provide the coating film with excellent weatherability. The surface-treatment layer may be provided on at least part of a surface that includes an end part of the laminate, and may be provided on the entire surface of the laminate.

The material of the surface-treatment layer can be selected as appropriate from publicly known materials in consideration of the function of the surface-treatment layer. For example, the material may be aluminum oxide, silica, or zirconium oxide. The material of the surface-treatment layer may be one of the above-described materials used individually or two or more of the above-described materials used in combination. In a case in which stearic acid is used as a subsequently described surface tension adjustment layer, aluminum oxide can also function as an adsorbent foundation for the surface tension adjustment layer.

The film thickness of the surface-treatment layer may be adjusted as appropriate in consideration of the function of the surface-treatment layer. For example, the film thickness of the surface-treatment layer can be set as 0.5 nm to 15 nm. The film thickness of the surface-treatment layer is preferably 1 nm to 10 nm.

<Largest diameter of flat pigment particles>

The largest diameter of each of the flat pigment particles is the largest length (longitudinal axis) of the flat pigment particle. Specifically, the largest diameter of the flat pigment particles can be determined by combusting organic material in the coating composition or coating film by the same method as adopted for ash measurement in JIS K 7250-1:2006 and then observing flat pigment particles contained in the combustion residue using a shape analysis laser microscope "VK-X 250" produced by Keyence Corporation. Moreover, the term "average largest diameter of flat pigment particles" refers to the number-average of the largest diameters of 100 arbitrarily selected flat pigment particles that are contained in the combustion residue.

The average largest diameter of the flat pigment particles is 1,000 nm or more in one embodiment, 6,000 nm or more in another embodiment, and 10,000 nm or more in yet another embodiment, and is 20,000 nm or less in another embodiment. When the average largest diameter of the flat pigment particles is 1,000 nm or more, Mie scattering in the visible light wavelength region (380 nm to 780 nm) can be inhibited, and haze of a coating film can be further reduced.

From a viewpoint of further reducing haze of a coating film, the average largest diameter of the flat pigment particles is preferably sufficiently larger than the wavelength of visible light (380 nm to 780 nm), and is more preferably 6,000 nm or more.

<Thickness of flat pigment particles>

The thickness of each of the flat pigment particles is the length of the flat pigment particle in a direction perpendicular to a plane in which the largest diameter of the flat pigment particle is present. Specifically, the thickness of the flat pigment particles can be determined by combusting organic material in the coating composition or coating film by the same method as adopted for ash measurement in JIS K 7250-1:2006 and then observing the length of flat pigment particles contained in the combustion residue in a direction perpendicular to a plane in which the largest diameter of the flat pigment particle is present using a shape analysis laser microscope "VK-X 250" produced by Keyence Corporation. Moreover, the term "average thickness of flat pigment particles" refers to the number-average of the thicknesses of 100 arbitrarily selected flat pigment particles that are contained in the combustion residue.

The average thickness of the flat pigment particles is 50 nm or more in one embodiment, 80 nm or more in another embodiment, and 95 nm or more in yet another embodiment, and is 300 nm or less in one embodiment, 150 nm or less in another embodiment, 115 nm or less in yet another embodiment, 100 nm or less in yet another embodiment, 95 nm or less in yet another embodiment, and 80 nm or less in yet another embodiment. When the average thickness of the flat pigment particles is 300 nm or less, Mie scattering in the visible light wavelength region (380 nm to 780 nm) can be inhibited, and haze of a coating film can be further reduced.

From a viewpoint of further reducing haze of a coating film, the average thickness of the flat pigment particles is preferably sufficiently smaller than the wavelength of visible light (380 nm to 780 nm). Moreover, from this viewpoint, the average thickness of the flat pigment particles is preferably not more than half of the wavelength of visible light, preferably 145 nm or less, more preferably 100 nm or less, and even more preferably 80 nm or less.

<Aspect ratio of flat pigment particles>

The aspect ratio of the flat pigment particles (value obtained by dividing the average largest diameter of the flat pigment particles by the average thickness of the flat pigment particles) is preferably 700 or less, and more preferably within a range of 10 to 400. An aspect ratio of 700 or less and a subsequently described pigment area density of 300% or less improve radio wave transmittance of a coating film. Moreover, an aspect ratio of 10 or more and a subsequently described pigment area density of 50% or more further improve infrared light reflectance and visible light transparency of a coating film.

The aspect ratio of the flat pigment particles is 25 or more in one embodiment, 50 or more in another embodiment, 75 or more in yet another embodiment, 85 or more in yet another embodiment, 100 or more in yet another embodiment, 115 or more in yet another embodiment, 120 or more in yet another embodiment, and 125 or more in yet another embodiment, and is 370 or less in one embodiment, and 250 or less in another embodiment.

The aspect ratio of the flat pigment particles is preferably 75 or more from a viewpoint of further reducing haze of a coating film.

<Production method of flat pigment particles>

Conventional, publicly known methods of producing pigment laminates and the like can be adopted without any specific limitations as the method by which the flat pigment particles are produced. For example, a first production method, second production method, or the like described in PTL 1 may be used. The method by which the flat pigment particles are produced may be a wet method in which laminates are formed in solution. For example, a method in which a flat plate-like metal synthesized by a method described in JP 2002-004031 A or WO 2015/111095 A1, for example, is subjected to publicly known metal hydrous oxide coating treatment such as neutralization titration or homogeneous precipitation, and is then baked to coat the flat plate-like metal with a dielectric layer can be adopted as a wet production method. Alternatively, a method in which flat plate-like alumina particles are coated with a metal thin film layer by electroless plating or the like, are further subjected to publicly known metal hydrous oxide coating treatment such as neutralization titration or homogeneous precipitation, and are then baked to perform coating with a dielectric layer may be adopted as a wet production method. Moreover, particles obtained by performing formation of a surface-treatment layer as necessary and pulverization in the same way as in the subsequently described first production method with respect to a laminate of a metal layer and a dielectric layer produced by a method such as described above may be used as flat pigment particles obtained by a wet method. Furthermore, the subsequently described surface tension adjustment layer may be formed on the surface of the flat pigment particles as necessary. The following provides illustrative descriptions of a first production method and a second production method.

<First production method>

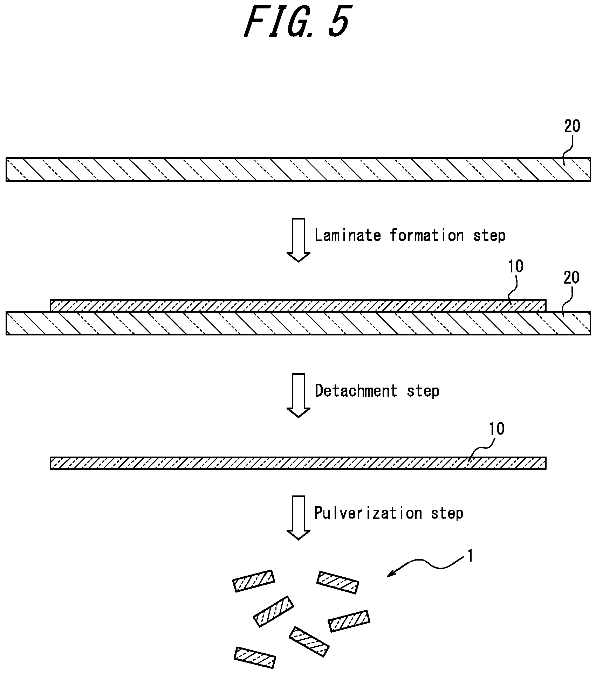

FIG. 5 is a schematic view illustrating a first production method as one example of a method of producing the flat pigment particles. In this example, the method of producing flat pigment particles 1 includes a step of forming a laminate 10 on a support 20 (hereinafter, referred to as a laminate formation step), a step of detaching the laminate 10 from the support 20 (hereinafter, referred to as a detachment step), and a step of pulverizing the detached laminate 10 (hereinafter, referred to as a pulverization step).

In addition, the first production method may optionally include: a step of forming a release layer on the support before the laminate formation step; a step of forming a surface-treatment layer on at least part of a surface of the laminate before, during, or after the pulverization step; a step of classifying the pulverized laminate or formed flat pigment particles; and so forth. Note that these optional steps are not illustrated in FIG. 5.

In the laminate formation step of the first production method, a dielectric layer and a metal thin film layer are layered alternately on at least one surface (upper surface in FIG. 5) of a support to form a laminate. Laminates may be formed on both surfaces of the support as necessary.

The material of the support may, for example, be a polymeric material or an inorganic material that is used in applications such as for supports. Such materials may be transparent or opaque materials. One of these materials may be used individually, or two or more of these materials may be used in combination.

Examples of polymeric materials include resin films such as polyolefin films (polyethylene, polypropylene, etc.), polyester films (polyethylene terephthalate, polyethylene naphthalate, etc.), polyvinyl chloride, cellulose triacetate, and water-soluble films (starch, gelatin, cellulose derivatives and cellulosic polymers such as carboxymethyl cellulose (CMC) and methyl cellulose (MC), polyvinyl alcohol (PVA), polyacrylic acid-based polymers, polyacrylamide (PAM), polyethylene oxide (PEO), etc.).

Examples of inorganic materials include metallic materials and non-metallic materials.

Examples of metallic materials include various types of stainless steel (SUS), gold, platinum, silver, copper, nickel, cobalt, titanium, iron, aluminum, tin, nickel-titanium (Ni-Ti) alloy, nickel-cobalt (Ni-Co) alloy, cobalt-chromium (Co-Cr) alloy, and zinc-tungsten (Zn-W) alloy.

Examples of non-metallic materials include inorganic compounds such as titanium dioxide, zinc oxide, aluminum oxide, zirconium oxide, silicon dioxide, tin(IV) oxide, ITO, and ATO; and glasses such as soda-lime-silica glass and silica glass.

Other examples of inorganic materials include metal-ceramic composites. Examples of metal-ceramic composites include aluminum-silicon carbide composite and silicon-silicon carbide composite.

The thickness of the support is not specifically limited and may be adjusted as appropriate. For example, the thickness of the support can be set as 0.01 mm to 10 mm. The thickness of the support is preferably 0.05 mm to 5 mm.

One support may be used individually, or two or more supports differing in terms of type and/or thickness may be overlapped and used together.

<Laminate formation step>

In the laminate formation step, a dielectric layer and a metal thin film layer are each layered on the support by electron beam evaporation (EB), chemical vapor deposition (CVD), sputtering, solution application, ion plating, dipping, spraying, or the like to form a laminate on the support. Of these methods, electron beam evaporation (EB), chemical vapor deposition (CVD), sputtering, and solution application are preferable. In terms of the order of layering, it is normally the case that a dielectric layer is formed on the support and then a metal thin film layer and a dielectric layer are formed in order once, twice, or more so that a dielectric layer is located outermost in the laminate.

<Detachment step>

In the detachment step, the laminate is detached from the support. The method of detachment is not specifically limited and can be a publicly known detachment method. For example, in a case in which a water-soluble film is used as the support, the laminate can be detached by immersing the support including the laminate in water so as to dissolve the water-soluble film used as the support. Moreover, in a case in which a subsequently described release layer is provided at the surface of the support, the release layer enables easy detachment of the laminate. Furthermore, a method in which the support including the laminate is immersed in a water tank and is then ultrasonicated to detach the laminate from the support can be used.

<Pulverization step>

In the pulverization step, the laminate that has been detached from the support is pulverized to a desired size (largest diameter). The pulverization method can be a publicly known method of pulverizing pigments or the like. For example, mechanical pulverization by a pulverizer, or wet or dry pulverization using a vibration mill, a ball mill, a jet mill, an ultrasonic homogenizer, or the like may be adopted. The method by which the average largest diameter of the laminate is adjusted may be by adjusting input energy in the pulverization method. Specifically, in the case of mechanical pulverization, for example, the device power or pulverization time may be adjusted. Moreover, in the case of pulverization by an ultrasonic homogenizer, for example, the device power, amplitude, or pulverization time may be adjusted. For example, when pulverization is performed using an ultrasonic homogenizer, the device power may be adjusted within a range of 15 W to 240 W, the amplitude may be adjusted within a range of 10 $\mu$m to 60 $\mu$m, and the pulverization time may be adjusted within a range of 30 s to 3,600 s.

Any solvent in which constituent components of the laminate do not dissolve may be used as a solvent in wet pulverization. Examples include water; alcohols such as methanol, ethanol, isopropanol, n-butyl alcohol, t-butyl alcohol, and ethylene glycol; ketones such as acetone and methyl ethyl ketone; esters such as ethyl acetate; halogenated solvents such as chloroform and methylene chloride; aliphatic hydrocarbons such as butane and hexane; ethers such as tetrahydrofuran (THF), butyl ether, and dioxane; aromatic hydrocarbons such as benzene, xylene, and toluene; and amides such as N,N-dimethylformamide (DMF) and dimethylacetamide (DMAc). One of these solvents may be used individually, or two or more of these solvents may be used in combination. Furthermore, the laminate may be pulverized by ultrasound.

In the case of dry pulverization, the laminate may be cooled using liquid nitrogen or the like and then be pulverized.

In a case in which a step of forming a subsequently described surface-treatment layer is not performed, pulverized laminates obtained through the pulverization step are the flat pigment particles.

<Optional steps of first production method>

As previously described, the first production method may optionally include a step of forming a release layer on the support before the laminate formation step. The step of forming a release layer may more specifically involve, for example, forming a release layer having an acrylic resin or the like as a raw material on a surface of the support before the laminate formation step. The method by which the release layer is formed can be a conventional, publicly known method such as a method described in PTL 1. The formation of a release layer on the surface of the support can facilitate detachment of the laminate from the support in the subsequently performed detachment step.

The first production method may also optionally include a step of classifying the pulverized laminate or formed flat pigment particles. The method of classifying is not specifically limited and can be a conventional, publicly known classifying method. For example, a classifying method using a classifier or the like as described in PTL 1 may be adopted.

The first production method may also optionally include a step of forming a surface-treatment layer on at least part of a surface of the laminate before, during, or after the pulverization step. In one embodiment, a step of forming a surface-treatment layer on at least part of a surface of the laminate is included after the pulverization step.

The method by which the surface-treatment layer is formed can be a conventional, publicly known method. Examples include a neutralization hydrolysis method, a sol-gel method, and a thermal decomposition method. Through these methods, a surface-treatment layer can also be formed uniformly on end surfaces of a laminate (thickness direction surfaces of a laminate).

In a specific example of the neutralization hydrolysis method, the pulverized laminate is dispersed in distilled water to prepare a slurry, and then a sodium aluminate aqueous solution is added to the slurry. Sulfuric acid is added during addition of the sodium aluminate aqueous solution so as to maintain the pH of the slurry at approximately 6.5. Filtration and washing with water are performed after addition of the sodium aluminate aqueous solution, and, in this manner, a surface-treatment layer containing aluminum oxide can be formed at the laminate surface.

In an example of the sol-gel method, hydrolysis and polycondensation of a solution of an organometallic compound or the like are carried out to form a sol, and then gelation is performed. Thereafter, heating is performed, and, in this manner, a surface-treatment layer containing a metal oxide can be formed at the laminate surface.

<Second production method>

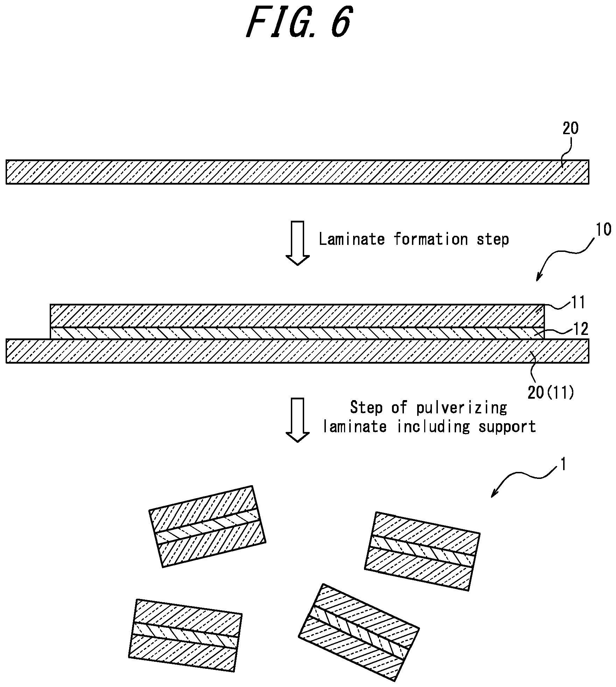

FIG. 6 is a schematic view illustrating a second production method as another example of a method of producing the flat pigment particles. As illustrated in FIG. 6, the second production method includes a laminate formation step and a pulverization step of pulverizing a laminate 10 including a support 20. The second production method differs from the first production method in terms that the support 20 constitutes part of flat pigment particles 1. Note that in the example illustrated in FIG. 6, the support 20 functions as a dielectric layer 11 of the laminate 10.

<Laminate formation step>

In the laminate formation step, at least one type of layer among a dielectric layer and a metal thin film layer is layered on the support to form a laminate. The support in the second production method is a transparent material from among the materials listed for the support in the first production method.

In a case in which the support constitutes a dielectric layer of the laminate, any of the previously described dielectric layer materials may be used as the material of the support. Moreover, in a case in which the support constitutes a metal thin film layer of the laminate, any of the previously described metal thin film layer materials may be used as the material of the support.

In both a case in which the support constitutes a dielectric layer of the laminate and a case in which the support constitutes a metal thin film layer of the laminate, at least one type of layer among a dielectric layer and a metal thin film layer is layered on one surface or both surfaces of the support in the laminate formation step such that outermost layers of the final laminate are dielectric layers.

<Step of pulverizing laminate including support>

The second production method includes a step of pulverizing the laminate including the support. The pulverization method may be any of the same methods as described for the first production method.

<Optional steps of second production method>

Although a step of forming a release layer on the support may be omitted in the second production method because the support constitutes a dielectric layer or a metal thin film layer of the laminate, the second production method may include a step of forming a release layer on the support as necessary. The method by which the release layer is formed on the support may be the same as any of the methods described for the first production method.

In the same way as the first production method, the second production method may also optionally include: a step of classifying the pulverized laminate or formed flat pigment particles; and a step of forming a surface-treatment layer on at least part of a surface of the laminate before, during, or after the pulverization step. Description of these steps is omitted since they are the same as for the first production method.

<Surface tension adjustment layer>

The flat pigment particles may optionally have a surface tension adjustment layer coating a surface thereof. The surface tension adjustment layer is provided on at least part of a surface of the flat pigment particles and may be provided on the entire surface of the flat pigment particles.

The material of the surface tension adjustment layer can be selected as appropriate from publicly known materials in consideration of the function of the surface tension adjustment layer. Examples include stearic acid, oleic acid, phosphonic acid, and esters of phosphoric acid. The material of the surface tension adjustment layer may be one of the above-described materials used individually or two or more of the above-described materials used in combination.

The amount of the material of the surface tension adjustment layer may be adjusted as appropriate in consideration of the function of the surface tension adjustment layer. For example, the amount of the material of the surface tension adjustment layer can be set as 0.01 parts by mass to 10 parts by mass relative to 100 parts by mass of the flat pigment particles. The amount of the material of the surface tension adjustment layer is preferably 0.1 parts by mass to 3 parts by mass.

The thickness of the surface tension adjustment layer may be adjusted as appropriate in consideration of the function of the surface tension adjustment layer. For example, the thickness of the surface tension adjustment layer can be set as 0.1 nm to 10 nm. The thickness of the surface tension adjustment layer is preferably 0.1 nm to 5 nm, and more preferably 0.1 nm to 2 nm.

The method by which the surface tension adjustment layer is formed can be a conventional, publicly known method. In one example, the flat pigment particles are added into a solution containing stearic acid and petroleum distillate and are dispersed using an ultrasonic bath. Next, the resultant dispersion is suction filtered and washed with a solvent, and then drying is performed. In this manner, a surface tension adjustment layer can be formed on the flat pigment particles.

The mass of the flat pigment particles as a proportion relative to the total of the mass of the flat pigment particles and the total mass of the resin component and the curing agent is, for example, 0.5 mass% or more, 1 mass% or more, 3 mass% or more, 5 mass% or more, or 10 mass% or more. Moreover, the mass of the flat pigment particles as a proportion relative to the total of the mass of the flat pigment particles and the total mass of the resin component and the curing agent is, for example, 20 mass% or less, 15 mass% or less, 10 mass% or less, 5 mass% or less, 3 mass% or less, or 1 mass% or less.

<Resin component>

The resin component acts as a coating film forming element. In the present disclosure, the resin component includes at least one selected from the group consisting of tris(2-acryloyloxyethyl) isocyanurate, 2-hydroxyethylbis(2-acryloyloxyethyl) isocyanurate, 1,3,5-triacryloylhexahydro-1,3,5-triazine, and triglycidyl isocyanurate. It is thought that these resin components can reduce haze of a coating film by inhibiting aggregation of the flat pigment particles through interactions with the surfaces of the flat pigment particles, and can also reduce haze of a coating film as a result of having a higher refractive index than typical resin components, which eases localized refractive index difference between the flat pigment particles and the resin component and inhibits light scattering. However, this theory is not intended to be restricting.

Note that the resin component may include another resin component or may not include another resin component (i.e., the resin component may be composed of only at least one selected from the group consisting of tris(2-acryloyloxyethyl) isocyanurate, 2-hydroxyethylbis(2-acryloyloxyethyl) isocyanurate, 1,3,5-triacryloylhexahydro-1,3,5-triazine, and triglycidyl isocyanurate). The resin component may be one type of resin component used individually or two or more types of resin components used in combination.

The content (total content) of at least one selected from the group consisting of tris(2-acryloyloxyethyl) isocyanurate, 2-hydroxyethylbis(2-acryloyloxyethyl) isocyanurate, 1,3,5-triacryloylhexahydro-1,3,5-triazine, and triglycidyl isocyanurate in the resin component is preferably 50 mass% or more, and more preferably 80 mass% or more, and may be 100 mass%.

Examples of other resin components such as mentioned above include acrylic resins, polyester resins, alkyd resins, fluororesins, epoxy resins, polyurethane resins, polyether resins, and so forth described in PTL 1.

The content of the resin component in the coating composition may be 50 parts by mass or more, 70 parts by mass or more, 75 parts by mass or more, 80 parts by mass or more, 85 parts by mass or more, 90 parts by mass or more, or 95 parts by mass or more relative to 100 parts by mass of total solid content of the coating composition, for example. Moreover, the content of the resin component in the coating composition may be less than 100 parts by mass, 95 parts by mass or less, 90 parts by mass or less, 85 parts by mass or less, 80 parts by mass or less, 75 parts by mass or less, or 70 parts by mass or less relative to 100 parts by mass of total solid content of the coating composition, for example.

<Curing agent>

The curing agent acts to cure the coating composition, and in particular the resin component. The curing agent is preferably a compound that generates radicals through light or heat or a compound that generates acid through light. In a case in which the curing agent generates radicals through light or heat or generates acid through light, curing of the resin component can be promoted after applying the coating composition onto a substrate by irradiating the coating composition with light or heating the coating composition to generate radicals or acid.

The curing agent is preferably a compound including at least one element selected from nitrogen, sulfur, and phosphorus. Of such compounds, those including at least one element selected from nitrogen, sulfur, and phosphorus that is not an Arrhenius acid/base are more preferable, and those including an aromatic ring are even more preferable.

In the present disclosure, the curing agent has an effect of reducing haze of a coating film formed from the coating composition in addition to acting to cure the coating composition, and in particular the resin component. It is thought that the curing agent is adsorbed onto the surface of the flat pigment particles, which improves affinity of the flat pigment particles and the resin component and inhibits aggregation of the flat pigment particles, thereby reducing haze of a coating film. However, this theory is not intended to be restricting.

Specific examples of the curing agent include 1-hydroxycyclohexyl phenyl ketone, 2-hydroxy-2-methyl-1-phenylpropan-1-one, 2-methyl-1-(4-methylthiophenyl)-2-morpholinopropan-1-one, 2,4,6-trimethylbenzoyldiphenylphosphine oxide, bis(2,4,6-trimethylbenzoyl)phenylphosphine oxide, 2-(dimethylamino)-2-[(4-methylphenyl)methyl]-1-butanone, α-cumyl peroxyneodecanoate, and 2-methyl-2-[(4-methylphenyl)sulfonyl]-1-[4-(methylthio)phenyl]-1-propanone. The curing agent may be one type of curing agent used individually or two or more types of curing agents used in combination.

In one embodiment, the curing agent is at least one selected from the group consisting of 1-hydroxycyclohexyl phenyl ketone, 2-hydroxy-2-methyl-1-phenylpropan-1-one, 2-methyl-1-(4-methylthiophenyl)-2-morpholinopropan-1-one, 2,4,6-trimethylbenzoyldiphenylphosphine oxide, bis(2,4,6-trimethylbenzoyl)phenylphosphine oxide, 2-(dimethylamino)-2-[(4-methylphenyl)methyl]-1-[4-(4-morpholinyl)phenyl]-1-butanone, α-cumyl peroxyneodecanoate, and 2-methyl-2-[(4-methylphenyl)sulfonyl]-1-[4-(methylthio)phenyl]-1-propanone.

The content of the curing agent in the coating composition relative to 100 parts by mass of the resin component is preferably 1 part by mass or more, and more preferably 2 parts by mass or more, and is preferably 35 parts by mass or less, more preferably 25 parts by mass or less, more preferably 20 parts by mass or less, and more preferably 10 parts by mass or less. When the content of the curing agent is 1 part by mass or more relative to 100 parts by mass of the resin component, curing of the resin component proceeds at a sufficient rate. Moreover, when the content of the curing agent is not less than 1 part by mass and not more than 35 parts by mass relative to 100 parts by mass of the resin component, haze of a coating film can be further reduced.

A ratio of the mass of the flat pigment particles and the total mass of the resin component and the curing agent in the coating composition (mass of flat pigment particles:total mass of resin component and curing agent) is preferably within a range of 0.5:99.5 to 15:85. When the ratio of the mass of the flat pigment particles and the total mass of the resin component and the curing agent is within this range, infrared light reflectance and visible light transparency of a coating film can be further improved while also further reducing haze of the coating film.

<Other components>

Besides the flat pigment particles, the resin component, and the curing agent, the coating composition may contain other components such as solvents, anti-sagging agents, viscosity modifiers, anti-settling agents, cross-linking promotors, leveling agents, surface modifiers, defoamers, plasticizers, preservatives, fungicides, and ultraviolet stabilizers. Each of these other components may be one type used individually or two or more types used in combination.

A conventional, publicly known solvent for coating compositions can be selected as appropriate for use as a solvent. Examples include alcohols such as methanol, ethanol, 2-propanol, and 1-butanol; esters such as ethyl acetate, butyl acetate, isobutyl acetate, ethyl propionate, ethylene glycol monomethyl ether acetate, propylene glycol monomethyl ether acetate, and propylene glycol monoethyl ether acetate; ethers such as diethyl ether, propylene glycol monomethyl ether, ethylene glycol monomethyl ether, ethylene glycol monoethyl ether, dioxane, and tetrahydrofuran (THF); glycols such as ethylene glycol, diethylene glycol, propylene glycol, dipropylene glycol, 1,3-butylene glycol, pentamethylene glycol, and 1,3-octylene glycol; amides such as formamide, N-methylformamide, dimethylformamide (DMF), dimethylacetamide, and N-methylpyrrolidone (NMP); sulfoxides such as dimethyl sulfoxide (DMSO); ketones such as acetone, methyl ethyl ketone (MEK), methyl propyl ketone, methyl isobutyl ketone, acetylacetone, and cyclohexanone; aromatic hydrocarbons such as toluene, xylene, mesitylene, and dodecylbenzene; and halogenated solvents such as chloroform and dichloromethylene.

<Production method of coating composition>

No specific limitations are placed on the production method of the coating composition. The coating composition can be produced by mixing the previously described flat pigment particles, resin component, and curing agent, and also other components that are optional components, by a conventional, publicly known method. In a case in which a value for the water covering area of the flat pigment particles is obtained by a subsequently described method and then the coating film specific gravity, film thickness, and subsequently described pigment area density for a formed coating film are estimated in advance, the pigment area density of the coating film can easily be adjusted to a desired value by, in production of the coating composition, adjusting the pigment mass concentration in accordance with the water covering area, for example.

(Coating film)

The presently disclosed coating film contains flat pigment particles, a resin component, and a curing agent. The coating film may also contain other components besides the flat pigment particles, the resin component, and the curing agent.

Note that the flat pigment particles, the resin component, the curing agent, and the other components are as previously described in the "Coating composition" section.

In one embodiment, the presently disclosed coating film is a coating film produced using the presently disclosed coating composition.

<Production method of coating film>

The presently disclosed coating film can be produced on a surface for coating using the presently disclosed coating composition set forth above, for example.

Production of the coating film can be performed by a conventional, publicly known coating method. For example, coating may be performed using an applicator, a bar coater, a brush, a spray, a roller, a roll coater, a curtain coater, or the like. The drying temperature after coating with the coating composition may be adjusted as appropriate depending on the solvent and so forth. For example, the drying temperature can be set as 30°C to 200°C, and preferably 40°C to 160°C when drying in a short period of time, such as 10 seconds to 30 minutes, is required. Energy rays such as ultraviolet light may be used in a case in which drying in a short period of time is required. Moreover, drying at room temperature or the like may be adopted in a case in which drying in a short period of time is not required, for example.

The film thickness of the presently disclosed coating film is preferably 1 $\mu$m or more. When the film thickness of the coating film is 1 $\mu$m or more, high radio wave transmittance is obtained. The upper limit for the film thickness may be adjusted as appropriate depending on the desired infrared light reflectance, visible light transparency, and so forth. The film thickness is 3 $\mu$m or more in one embodiment, and 15 $\mu$m or more in another embodiment, and is 50 $\mu$m or less in one embodiment, 40 $\mu$m or less in another embodiment, and 35 $\mu$m or less in yet another embodiment. In one embodiment, the film thickness of the coating film is 3 $\mu$m to 50 $\mu$m. Note that the film thickness of the coating film referred to herein is the dry film thickness.

The film thickness of the coating film is preferably a thickness such that the flat pigment particles are contained inside the coating film without protruding from the surface of the coating film from a viewpoint of reducing haze of the coating film, and is preferably 3 $\mu$m or more from this viewpoint. Moreover, the film thickness of the coating film is preferably 50 $\mu$m or less from a viewpoint of inhibiting sagging of the coating film prior to drying.

<Pigment area density>

The pigment area density in the coating film is preferably within a range of 50% to 300%. Radio wave transmittance of the coating film improves when the aspect ratio of the flat pigment particles is 700 or less and the pigment area density of the coating film is 300% or less. Moreover, infrared light reflectance and visible light transparency of the coating film further improve when the aspect ratio of the flat pigment particles is 10 or more and the pigment area density of the coating film is 50% or more.

The pigment area density is 50% or more in one embodiment, and 75% or more in another embodiment, and is 250% or less in one embodiment.

The pigment area density is a mass ratio (%) of the content of the flat pigment particles contained in the coating film relative to the content necessary for the flat pigment particles to cover a surface of a specific area, without excess or deficiency, when arranged on the surface such that they do not overlap with one another. Therefore, in a case in which the pigment area density is 100%, the content of the flat pigment particles contained in the coating film is equal to the content necessary for the flat pigment particles to cover a surface of a specific area without excess or deficiency while not overlapping with one another. More specifically, the pigment area density is calculated from the following formula (1).

$$\text{Pigment area density (\%)} = \text{Water covering area (cm}^2\text{/g)} \times \text{Pigment mass concentration (\%)} \times \text{Coating film specific gravity (g/cm}^3\text{)} \times \text{Film thickness (cm)} \cdots \text{Formula (1)}$$

The water covering area (cm2/g; WCA) in formula (1) is determined by a method in accordance with JIS K 5906:1998. The water covering area can be increased by reducing the thickness of the flat pigment particles, for example, and can be reduced by increasing the thickness of the flat pigment particles, for example.

Moreover, the pigment mass concentration (%, PWC) in formula (1) is calculated for a unit mass coating film from the following formula (2).

$$\text{Pigment mass concentration (\%)} = \text{Mass of flat pigment particles (g)} \times 100/(\text{Mass of coating film (g)}) \cdots \text{Formula (2)}$$

(Article)

The presently disclosed coating film can be adopted for various articles.

A substrate, coating surface, or coating target on which the coating film is formed may be selected as appropriate without any specific limitations other than being an object, surface, or target for which infrared light reflectance and visible light transparency are required. Examples of such substrates, coating surfaces, and coating targets include the interior and exterior of bodies of vehicles such as automobiles and railway vehicles, airframes of aircraft, and hulls and superstructures (outfitting) of watercraft; the interior and exterior of buildings; furniture and fittings; window glass of vehicles, aircraft, watercraft, buildings, etc.; transparent bodies such as cases, containers, resin plates, and films made from glass, acrylic, polycarbonate, etc.; housings and glass components of electrical goods such as displays, monitors, and refrigerators; and coating films that have been coated onto any of the preceding examples.

Accordingly, examples of articles that may be provided with the presently disclosed coating film include vehicles such as automobiles and railway vehicles, aircraft, watercraft, buildings, furniture, fittings, window glass, transparent bodies, and electrical goods.

EXAMPLES

Although the following describes the present disclosure in more detail through examples, the present disclosure is not in any way limited by the following examples.

A glass sheet of 50 mm × 50 mm × 2 mm produced by T.P Giken was used as a support in a laminate formation step.

ACRYDIC® A-1371 (ACRYDIC is a registered trademark in Japan, other countries, or both) produced by DIC Corporation was used as an acrylic resin for forming a release layer.

Dielectric layers and metal thin film layers were formed using a vacuum evaporation device "EX-200" produced by ULVAC, Inc. Film thickness was controlled using a crystal oscillation type deposition controller "CRTM-6000G" produced by ULVAC, Inc.

An ultrasonic homogenizer "US-600T" produced by NISSEI Corporation was used as an ultrasonic device.

Surface resistivity was measured using a Super Megohmmeter "SM-8220" produced by HIOKI E.E. Corporation.

Visible light transmittance and solar heat gain coefficient were measured using a spectrophotometer "UV-3600" produced by Shimadzu Corporation.

Haze was measured using a haze meter "Model No. NDH 2000" produced by Nippon Denshoku Industries Co., Ltd.

(Example 1)

Flat pigment particles were produced by the first production method as described below.

Acrylic resin (A-1371) for forming a release layer was adjusted to a concentration of 10 mass% (in terms of solid content) using butyl acetate. Next, the resultant acrylic resin solution was applied at one side of a support by a spin coater such as to have a dry film thickness of 1 μm. The applied solution was subsequently dried at 80°C for 15 minutes to form a release layer at one side of the support.

The aforementioned vacuum evaporation apparatus was used to alternately layer a dielectric layer (ITO layer) of 40 nm in film thickness as a first layer, a metal thin film layer (Ag layer) of 15 nm in film thickness as a second layer, and a dielectric layer (ITO layer) of 40 nm in film thickness as a third layer on the release layer by electron beam evaporation so as to form a laminate of 95 nm in thickness.

The support including the obtained laminate was immersed in acetone for 30 minutes so as to dissolve the release layer and detach the laminate from the support. Next, after the support had been removed, acetone containing the laminate was subjected to ultrasonication to pulverize the laminate. The acetone containing the pulverized laminates was then left to settle for 1 hour, supernatant was subsequently removed by decantation, and drying under reduced pressure was performed overnight using a vacuum desiccator. The resultant laminates were used as flat pigment particles without formation of a surface-treatment layer or a surface tension adjustment layer. The largest diameters of 100 obtained flat pigment particles were measured using a laser microscope "VK-X 250" produced by Keyence Corporation, and the average of the largest diameters was calculated. The average largest diameter was 10,000 nm. The average thickness of the flat pigment particles was set as 95 nm through control of film thickness in laminate production. The aspect ratio calculated from the values described above was 105.

<Production of coating composition>

The obtained flat pigment particles and a solvent (mixture of ethyl acetate and butyl acetate) were mixed and stirred to form a slurry. Next, the slurry was added to a mixture of 95 parts by mass of tris(2-acryloyloxyethyl) isocyanurate as a resin component and 5 parts by mass of 1-hydroxycyclohexyl phenyl ketone as a curing agent with the pigment mass concentration adjusted to give a coating film pigment area density of 75% when a coating film having a film thickness of 3 $\mu$m ($3 \times 10^{-4}$ cm) was formed, and was stirred therewith to obtain a coating composition having a coating solid content of 50 mass%.

<Formation of coating film>

Next, the obtained coating composition was applied onto a glass sheet using a bar coater such as to have a dry film thickness of 3 $\mu$m. The coating composition was left at room temperature for 10 minutes after application, was dried at 60°C for 10 minutes, and was subsequently irradiated with ultraviolet light with a cumulative dose of 180 mJ/cm$^2$ using a high-pressure mercury lamp to obtain a coating film having a film thickness of 3 $\mu$m.

(Examples 2 to 18, 20 to 34, and 36 to 45, and Comparative Examples 1 and 2)

A coating composition was produced and a coating film was formed in the same way as in Example 1 with the exception that the material, layer configuration, and film thickness of the layers of the laminate (flat pigment particles), the average thickness and aspect ratio of the flat pigment particles, and the film thickness of the coating film were set as shown in Table 1, 2, or 3, and a resin component and a curing agent shown in Table 1, 2, or 3 were used in amounts shown in Table 1, 2, or 3. The pigment area density of each coating film was 75%.

Note that in Example 22, the laminates obtained after pulverization and drying under reduced pressure were added into distilled water, were adjusted to 45°C to 70°C, and were stirred while sodium aluminate was added in an amount of 4 mass% relative to the pigment. During the above, sulfuric acid was used to maintain the pH of the slurry at 6 to 9 so as to produce an infrared reflective pigment for which a surface-treatment layer of aluminum oxide had been formed. Filtration, washing with distilled water, and then drying under reduced pressure were performed, and, in this manner, a surface-treatment layer containing alumina (Al$_2$O$_3$) was formed.

Also note that in Example 24, a silver-indium-based alloy was used as a silver alloy in the metal thin film layer.

(Examples 19, 35, and 46)

A coating composition was produced in the same way as in Example 1 with the exception that the material, layer configuration, and film thickness of the layers of the laminate (flat pigment particles), the average thickness and aspect ratio of the flat pigment particles, and the film thickness of the coating film were set as shown in Table 1, 2, or 3, and a resin component and a curing agent shown in Table 1, 2, or 3 were used in amounts shown in Table 1, 2, or 3.

Next, the obtained coating composition was applied onto a glass sheet using a bar coater such as to have a dry film thickness of 7 $\mu$m. After application, the coating composition was left at room temperature for 2 minutes and was then dried at 60°C for 70 minutes to obtain a coating film having a film thickness of 7 $\mu$m. The pigment area density of each coating film was 75%.

(Evaluation of coating film)

The radio wave transmittance, visible light transparency, infrared light reflectance, and haze of the coating film in each example or comparative example were evaluated as described below. The results are shown in Table 1, 2, or 3.

Note that these evaluations were not performed in Comparative Example 2 because a coating film could not be formed.

<Radio wave transmittance>

The aforementioned Super Megohmmeter "SM-8220" was used to measure the surface resistivity of the obtained coating film with an applied voltage of 100 V in an environment of 23°C and 50%. Radio wave transmittance was evaluated by the following standard.

Grade 3 indicates the most superior radio wave transmittance, grades 2 and 3 pass evaluation, and grade 1 fails evaluation.
Grade 1: Surface resistivity of less than $1.0 \times 10^{10}$ Ω/sq.
Grade 2: Surface resistivity of not less than $1.0 \times 10^{10}$ Ω/sq. and less than $1.0 \times 10^{11}$ Ω/sq.
Grade 3: Surface resistivity of $1.0 \times 10^{11}$ Ω/sq. or more

<Visible light transparency and infrared light reflectance>

The visible light transmittance and solar heat gain coefficient of the obtained coating film were measured in accordance with JIS-R3106:1998 "Testing method on transmittance, reflectance, and emittance of flat glasses and valuation of solar heat gain coefficient", and a heat shielding coefficient was calculated from the following formula (3) using the measured solar heat gain coefficient.

$$\text{Heat shielding coefficient} = \text{Solar heat gain coefficient}/0.88 \cdots \text{Formula (3)}$$

Visible light transparency and infrared light reflectance were evaluated by the following standards.
Grade 3 indicates the most superior visible light transparency or infrared light reflectance, grades 2 and 3 pass evaluation, and grade 1 fails evaluation.

-Visible light transparency-

Grade 1: Visible light transmittance of less than 70%
Grade 2: Visible light transmittance of not less than 70% and less than 80%
Grade 3: Visible light transmittance of 80% or more

-Infrared light reflectance-

Grade 1: Heat shielding coefficient of more than 0.85
Grade 2: Heat shielding coefficient of more than 0.75 and not more than 0.85
Grade 3: Heat shielding coefficient of 0.75 or less

<Haze>

The aforementioned haze meter was used to measure haze of the obtained coating film. Haze was evaluated by the following standard.
Grade 3 indicates the lowest haze, grades 2 and 3 pass evaluation, and grade 1 fails evaluation.

Grade 1: Haze value of more than 4.5%
Grade 2: Haze value of more than 2.5% and not more than 4.5%

Grade 3: Haze value of 2.5% or less

Table 1

| | | | Examples |  |  |  |  |  |  |  |  |  |  |  |  |  |  |  |  |  |  |  |
|---|---|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 | 19 | 20 |
| Laminate | First layer (dielectric layer) | Type of material | ITO | ITO | ITO | ITO | ITO | ITO | ITO | ITO | ITO | ITO | ITO | ITO | ITO | ITO | ITO | ITO | ITO | ITO | ITO | ITO |
| | | Film thickness (nm) | 40 | 40 | 40 | 40 | 40 | 40 | 40 | 40 | 40 | 40 | 40 | 40 | 40 | 40 | 40 | 40 | 40 | 40 | 40 | 40 |
| | Second layer (metal thin film layer) | Type of material | Ag | Ag | Ag | Ag | Ag | Ag | Ag | Ag | Ag | Ag | Ag | Ag | Ag | Ag | Ag | Ag | Ag | Ag | Ag | Ag |
| | | Film thickness (nm) | 15 | 15 | 15 | 15 | 15 | 15 | 15 | 15 | 15 | 15 | 15 | 15 | 15 | 15 | 15 | 15 | 15 | 15 | 15 | 15 |
| | Third layer (dielectric layer) | Type of material | ITO | ITO | ITO | ITO | ITO | ITO | ITO | ITO | ITO | ITO | ITO | ITO | ITO | ITO | ITO | ITO | ITO | ITO | ITO | ITO |
| | | Film thickness (nm) | 40 | 40 | 40 | 40 | 40 | 40 | 40 | 40 | 40 | 40 | 40 | 40 | 40 | 40 | 40 | 40 | 40 | 40 | 40 | 40 |
| | Fourth layer (metal thin film layer) | Type of material | - | - | - | - | - | - | - | - | - | - | - | - | - | - | - | - | - | - | - | - |
| | | Film thickness (nm) | - | - | - | - | - | - | - | - | - | - | - | - | - | - | - | - | - | - | - | - |
| | Fifth layer (dielectric layer) | Type of material | - | - | - | - | - | - | - | - | - | - | - | - | - | - | - | - | - | - | - | - |
| | | Film thickness (nm) | - | - | - | - | - | - | - | - | - | - | - | - | - | - | - | - | - | - | - | - |
| | Total number of layers in laminate | | 3 | 3 | 3 | 3 | 3 | 3 | 3 | 3 | 3 | 3 | 3 | 3 | 3 | 3 | 3 | 3 | 3 | 3 | 3 | 3 |
| Flat pigment particles | Surface-treatment layer | Type of material | - | - | - | - | - | - | - | - | - | - | - | - | - | - | - | - | - | - | - | - |
| | | Film thickness (nm) | - | - | - | - | - | - | - | - | - | - | - | - | - | - | - | - | - | - | - | - |
| | Average largest diameter of flat pigment particles (nm) | | 10000 | 10000 | 10000 | 10000 | 10000 | 10000 | 10000 | 10000 | 10000 | 10000 | 10000 | 10000 | 10000 | 10000 | 10000 | 10000 | 10000 | 10000 | 10000 | 10000 |
| | Average thickness of flat pigment particles (nm) | | 95 | 95 | 95 | 95 | 95 | 95 | 95 | 95 | 95 | 95 | 95 | 95 | 95 | 95 | 95 | 95 | 95 | 95 | 95 | 95 |
| | Aspect ratio of flat pigment particles | | 105 | 105 | 105 | 105 | 105 | 105 | 105 | 105 | 105 | 105 | 105 | 105 | 105 | 105 | 105 | 105 | 105 | 105 | 105 | 105 |
| Resin component | Type of material *1 | | A | A | A | A | A | A | A | A | A/X | B | C | D | A/B | A | A | A | A | A | A | A |
| | Mass | | 41.0 | 44.7 | 46.2 | 47.3 | 47.1 | 41.9 | 37.7 | 35.3 | 18.8/18.8 | 44.7 | 44.7 | 44.7 | 22.4/22.4 | 44.7 | 44.7 | 44.7 | 44.7 | 44.7 | 44.7 | 43.3 |
| Curing agent | Type of material *2 | | a | a | a | a | a | a | a/d | a/d | a/d | a | a | h | a | b | c | d | e | f | g | a/c |
| | Mass | | 2.2 | 2.4 | 2.4 | 2.5 | 2.5 | 5.2 | 3.0/6.4 | 3.8/8.0 | 3.0/6.4 | 2.4 | 2.4 | 2.4 | 2.4 | 2.4 | 2.4 | 2.4 | 2.4 | 2.4 | 2.4 | 1.9/1.9 |
| Mass ratio | Flat pigment particles: (Resin component + Curing agent) | | 14.86 | 6.94 | 3.97 | 0.5/99.5 | 0.8/99.2 | 6.94 | 6.94 | 6.94 | 6.94 | 6.94 | 6.94 | 6.94 | 6.94 | 6.94 | 6.94 | 6.94 | 6.94 | 6.94 | 6.94 | 6.94 |
| | Curing conditions *3 | | α | α | α | α | α | α | α | α | α | α | α | α | α | α | α | α | α | α | β | α |
| Coating film | Film thickness (μm) | | 3 | 7 | 15 | 82 | 50 | 7 | 7 | 7 | 7 | 7 | 7 | 7 | 7 | 7 | 7 | 7 | 7 | 7 | 7 | 7 |
| Evaluation | Radio wave transmittance | | 3 | 3 | 3 | 3 | 3 | 3 | 3 | 3 | 3 | 3 | 3 | 3 | 3 | 3 | 3 | 3 | 3 | 3 | 3 | 3 |
| | Visible light transparency | | 3 | 3 | 3 | 3 | 3 | 3 | 3 | 3 | 3 | 3 | 3 | 3 | 3 | 3 | 3 | 3 | 3 | 3 | 3 | 3 |
| | Infrared light reflectance | | 2 | 2 | 2 | 2 | 2 | 2 | 2 | 2 | 2 | 2 | 2 | 2 | 2 | 2 | 2 | 2 | 2 | 2 | 2 | 2 |
| | Haze | | 2 | 2 | 3 | 2 | 3 | 2 | 3 | 2 | 2 | 2 | 2 | 2 | 2 | 2 | 3 | 3 | 3 | 3 | 3 | 3 |

Table 2

EP 3 689 977 A1

| | | | | Examples | | | | | | | | | | | | | | | Comparative examples | |
|---|---|---|---|---|---|---|---|---|---|---|---|---|---|---|---|---|---|---|---|---|---|
| | | | | 21 | 22 | 23 | 24 | 25 | 26 | 27 | 28 | 29 | 30 | 31 | 32 | 33 | 34 | 35 | 1 | 2 |
| Flat pigment particles | Laminate | First layer (dielectric layer) | Type of material | ITO | ITO | ITO | ITO | TiO$_2$ | TiO$_2$ | TiO$_2$ | TiO$_2$ | TiO$_2$ | TiO$_2$ | TiO$_2$ | TiO$_2$ | TiO$_2$ | TiO$_2$ | TiO$_2$ | ITO | ITO |
| | | | Film thickness (nm) | 40 | 40 | 20 | 40 | 32.5 | 32.5 | 32.5 | 32.5 | 32.5 | 32.5 | 32.5 | 32.5 | 32.5 | 32.5 | 32.5 | 40 | 40 |
| | | Second layer (metal thin film layer) | Type of material | Ag | Ag | Ag | Ag alloy | Ag | Ag | Ag | Ag | Ag | Ag | Ag | Ag | Ag | Ag | Ag | Ag | Ag |
| | | | Film thickness (mn) | 15 | 15 | 8 | 15 | 15 | 15 | 15 | 15 | 15 | 15 | 15 | 15 | 15 | 15 | 15 | 15 | 15 |
| | | Third layer (dielectric layer) | Type of material | ITO | ITO | ITO | ITO | TiO$_2$ | TiO$_2$ | TiO$_2$ | TiO$_2$ | TiO$_2$ | TiO$_2$ | TiO$_2$ | TiO$_2$ | TiO$_2$ | TiO$_2$ | TiO$_2$ | ITO | ITO |
| | | | Film thickness (nm) | 40 | 40 | 20 | 40 | 32.5 | 32.5 | 32.5 | 32.5 | 32.5 | 32.5 | 32.5 | 32.5 | 32.5 | 32.5 | 32.5 | 40 | 40 |
| | | Fourth layer (metal thin film layer) | Type of material | - | - | Ag | - | - | - | - | - | - | - | - | - | - | - | - | - | - |
| | | | Film thickness (nm) | - | - | 8 | - | - | - | - | - | - | - | - | - | - | - | - | - | - |
| | | Fifth layer (dielectric layer) | Type of material | - | - | ITO | - | - | - | - | - | - | - | - | - | - | - | - | - | - |
| | | | Film thickness (nm) | - | - | 20 | - | - | - | - | - | - | - | - | - | - | - | - | - | - |

18

(continued)

| | | | Examples | | | | | | | | | | | | | | | | Comparative examples | |
|---|---|---|---|---|---|---|---|---|---|---|---|---|---|---|---|---|---|---|---|---|---|
| | | | 21 | 22 | 23 | 24 | 25 | 26 | 27 | 28 | 29 | 30 | 31 | 32 | 33 | 34 | 35 | 1 | 2 |
| | Total number of layers in laminate | | 3 | 3 | 5 | 3 | 3 | 3 | 3 | 3 | 3 | 3 | 3 | 3 | 3 | 3 | 3 | 3 | 3 |
| | Surface-treatment layer | Type of material | - | Al₂O₃ | - | - | - | - | - | - | - | - | - | - | - | - | - | - | - |
| | | Film thickness (nm) | - | 5 | - | - | - | - | - | - | - | - | - | - | - | - | - | - | - |
| | Average largest diameter of flat pigment particles (nm) | | 10000 | 10000 | 10000 | 10000 | 10000 | 10000 | 10000 | 10000 | 10000 | 10000 | 10000 | 10000 | 10000 | 10000 | 10000 | 10000 | 10000 |
| | Average thickness of flat pigment particles (nm) | | 95 | 105 | 76 | 95 | 80 | 80 | 80 | 80 | 80 | 80 | 80 | 80 | 80 | 80 | 80 | 95 | 95 |
| | Aspect ratio of flat pigment particles | | 105 | 95 | 132 | 105 | 125 | 125 | 125 | 125 | 125 | 125 | 125 | 125 | 125 | 125 | 125 | 105 | 105 |
| Resin component | Type of material *1 | | A | A | A | A | A | B | C | D | A/B | A | A | A | A | A | A | X | A |
| | Mass | | 43.3 | 44.6 | 45.2 | 44.7 | 43.5 | 45.9 | 45.9 | 45.9 | 22.9/22.9 | 45.9 | 45.9 | 45.9 | 45.9 | 45.9 | 45.9 | 44.7 | 47.1 |
| Curing agent | Type of material *2 | | a/d | a | a | a | a | a | a | h | a | b | c | d | e | f | g | a | - |
| | Mass | | 1.9/1.9 | 2.3 | 2.4 | 2.4 | 4.8 | 2.4 | 2.4 | 2.4 | 2.4 | 2.4 | 2.4 | 2.4 | 2.4 | 2.4 | 2.4 | 2.4 | - |
| Mass ratio | Flat pigment particles : (Resin component + Curing agent) | | 6:94 | 6:94 | 5:95 | 6:94 | 3:97 | 3:97 | 3:97 | 3:97 | 3:97 | 3:97 | 3:97 | 3:97 | 3:97 | 3:97 | 3:97 | 6:94 | - |
| | Curing conditions *3 | | α | α | α | α | α | α | α | α | α | α | α | α | α | α | β | α | α |
| Coating film | Film thickness (μm) | | 7 | 7 | 7 | 7 | 7 | 7 | 7 | 7 | 7 | 7 | 7 | 7 | 7 | 7 | 7 | 7 | - |

| Evaluation | | Examples | | | | | | | | | | | | | | | Comparative examples | |
|---|---|---|---|---|---|---|---|---|---|---|---|---|---|---|---|---|---|---|---|
| | | 21 | 22 | 23 | 24 | 25 | 26 | 27 | 28 | 29 | 30 | 31 | 32 | 33 | 34 | 35 | 1 | 2 |
| Evaluation | Radio wave transmittance | 3 | 3 | 3 | 3 | 3 | 3 | 3 | 3 | 3 | 3 | 3 | 3 | 3 | 3 | 3 | 3 | - |
| | Visible light transparency | 3 | 3 | 3 | 3 | 3 | 3 | 3 | 3 | 3 | 3 | 3 | 3 | 3 | 3 | 3 | 3 | - |
| | Infrared light reflectance | 2 | 2 | 3 | 2 | 2 | 2 | 2 | 2 | 2 | 2 | 2 | 2 | 2 | 2 | 2 | 2 | - |
| | Haze | 3 | 2 | 2 | 2 | 2 | 2 | 2 | 2 | 2 | 2 | 3 | 3 | 3 | 3 | 2 | 1 | - |

Table 3

| | | | | Examples | | | | | | | | | | |
|---|---|---|---|---|---|---|---|---|---|---|---|---|---|---|
| | | | | 36 | 37 | 38 | 39 | 40 | 41 | 42 | 43 | 44 | 45 | 46 |
| Flat pigment particles | Laminate | First layer (dielectric layer) | Type of material | $ZrO_2$ | $ZrO_2$ | $ZrO_2$ | $ZrO_2$ | $ZrO_2$ | $ZrO_2$ | $ZrO_2$ | $ZrO_2$ | $ZrO_2$ | $ZrO_2$ | $ZrO_2$ |
| | | | Film thickness (nm) | 35 | 35 | 35 | 35 | 35 | 35 | 35 | 35 | 35 | 35 | 35 |
| | | Second layer (metal thin film layer) | Type of material | Ag | Ag | Ag | Ag | Ag | Ag | Ag | Ag | Ag | Ag | Ag |
| | | | Film thickness (nm) | 15 | 15 | 15 | 15 | 15 | 15 | 15 | 15 | 15 | 15 | 15 |
| | | Third layer (dielectric layer) | Type of material | $ZrO_2$ | $ZrO_2$ | $ZrO_2$ | $ZrO_2$ | $ZrO_2$ | $ZiO_2$ | $ZrO_2$ | $ZrO_2$ | $ZrO_2$ | $ZiO_2$ | $ZiO_2$ |
| | | | Film thickness (nm) | 35 | 35 | 35 | 35 | 35 | 35 | 35 | 35 | 35 | 35 | 35 |
| | | Fourth layer (metal thin film layer) | Type of material | - | - | - | - | - | - | - | - | - | - | - |
| | | | Film thickness (nm) | - | - | - | - | - | - | - | - | - | - | - |
| | | Fifth layer (dielectric layer) | Type of material | - | - | - | - | - | - | - | - | - | - | - |
| | | | Film thickness (nm) | - | - | - | - | - | - | - | - | - | - | - |
| | | Total number of layers in laminate | | 3 | 3 | 3 | 3 | 3 | 3 | 3 | 3 | 3 | 3 | 3 |

(continued)

| | | | Examples | | | | | | | | | | |
|---|---|---|---|---|---|---|---|---|---|---|---|---|---|
| | | | 36 | 37 | 38 | 39 | 40 | 41 | 42 | 43 | 44 | 45 | 46 |
| | Surface-treatment layer | Type of material | - | - | - | - | - | - | - | - | - | - | - |
| | | Film thickness (nm) | - | - | - | - | - | - | - | - | - | - | - |
| | Average largest diameter of flat pigment particles (nm) | | 10000 | 10000 | 10000 | 10000 | 10000 | 10000 | 10000 | 10000 | 10000 | 10000 | 10000 |
| | Average thickness of flat pigment particles (nm) | | 85 | 85 | 85 | 85 | 85 | 85 | 85 | 85 | 85 | 85 | 85 |
| | Aspect ratio of flat pigment particles | | 118 | 118 | 118 | 118 | 118 | 118 | 118 | 118 | 118 | 118 | 118 |
| Resin component | Type of material *1 | | A | B | C | D | A/B | A | A | A | A | A | A |
| | Mass | | 43.5 | 45.9 | 45.9 | 45.9 | 22.9/22.9 | 45.9 | 45.9 | 45.9 | 45.9 | 45.9 | 45.9 |
| Curing agent | Type of material *2 | | a | a | a | h | a | b | c | d | e | f | g |
| | Mass | | 4.8 | 2.4 | 2.4 | 2.4 | 2.4 | 2.4 | 2.4 | 2.4 | 2.4 | 2.4 | 2.4 |
| Mass ratio | Flat pigment particles: (Resin component + Curing agent) | | 3:97 | 3:97 | 3:97 | 3:97 | 3:97 | 3:97 | 3:97 | 3:97 | 3:97 | 3:97 | 3:97 |
| | Curing conditions *3 | | α | α | α | α | α | α | α | α | α | α | β |
| Coating film | Film thickness (μm) | | 7 | 7 | 7 | 7 | 7 | 7 | 7 | 7 | 7 | 7 | 7 |

(continued)

| | | Examples | | | | | | | | | | |
|---|---|---|---|---|---|---|---|---|---|---|---|---|
| | | 36 | 37 | 38 | 39 | 40 | 41 | 42 | 43 | 44 | 45 | 46 |
| Evaluation | Radio wave transmittance | 3 | 3 | 3 | 3 | 3 | 3 | 3 | 3 | 3 | 3 | 3 |
| | Visible light transparency | 3 | 3 | 3 | 3 | 3 | 3 | 3 | 3 | 3 | 3 | 3 |
| | Infrared light reflectance | 2 | 2 | 2 | 2 | 2 | 2 | 2 | 2 | 2 | 2 | 2 |
| | Haze | 2 | 2 | 2 | 2 | 2 | 2 | 3 | 3 | 3 | 3 | 2 |

*1 In the row for the type of material of the resin component:

"A" indicates tris(2-acryloyloxyethyl) isocyanurate;

"B" indicates 2-hydroxyethylbis(2-acryloyloxyethyl) isocyanurate;

"C" indicates 1,3,5-triacryloylhexahydro-1,3,5-triazine;

"D" indicates triglycidyl isocyanurate; and "X" indicates trimethylolpropane tris(dipropylene glycol acrylate).

Note that the two types A and X were used in Example 9 and the two types A and B were used in Examples 13, 29, and 40.

*2 In the row for the type of material of the curing agent:

"a" indicates 1-hydroxycyclohexyl phenyl ketone;

"b" indicates 2-hydroxy-2-methyl-1-phenylpropan-1-one;

"c" indicates 2-methyl-1-(4-methylthiophenyl)-2-morpholinopropan-1-one;

"d" indicates 2,4,6-trimethylbenzoyldiphenylphosphine oxide;

"e" indicates bis(2,4,6-trimethylbenzoyl)phenylphosphine oxide;

"f" indicates 2-(dimethylamino)-2-[(4-methylphenyl)methyl]-1-[4-(4-morpholinyl)phenyl]-1-butanone;

"g" indicates $\alpha$-cumyl peroxyneodecanoate; and

"h" indicates 2-methyl-2-[(4-methylphenyl)sulfonyl]-1-[4-(methylthio)phenyl]-1-propanon e.

Note that the two types a and d were used in Examples 7 to 9 and 21, and the two types a and c were used in Example 20.

*3 In the row for curing conditions:

"$\alpha$" indicates that the coating composition was left at room temperature for 10 minutes after application, was dried at 60°C for 10 minutes, and was subsequently irradiated with ultraviolet light with a cumulative dose of 180 mJ/cm$^2$ using a high-pressure mercury lamp to perform curing; and

"$\beta$" indicates that the coating composition was left at room temperature for 2 minutes after application and was dried at 60 °C for 70 minutes to perform curing.

It can be confirmed from Tables 1 to 3 that coating films produced from the coating compositions of the examples in accordance with the present disclosure had excellent infrared light reflectance and visible light transparency, and also had low haze.

INDUSTRIAL APPLICABILITY

Through the presently disclosed coating composition, it is possible to provide a coating film having excellent infrared light reflectance and visible light transparency, and also having low haze.

REFERENCE SIGNS LIST

1: flat pigment particle
10: laminate
11: dielectric layer
12: metal thin film layer
13: surface-treatment layer
14: surface tension adjustment layer
20: support

**Claims**

1. A coating composition comprising flat pigment particles, a resin component, and a curing agent, wherein
   the flat pigment particles include a laminate of dielectric layers and a metal thin film layer,
   the dielectric layers and the metal thin film layer are layered alternately in the laminate and the dielectric layers are located outermost in the laminate, and
   the resin component includes at least one selected from the group consisting of tris(2-acryloyloxyethyl) isocyanurate, 2-hydroxyethylbis(2-acryloyloxyethyl) isocyanurate, 1,3,5-triacryloylhexahydro-1,3,5-triazine, and triglycidyl isocyanurate.

2. The coating composition according to claim 1, wherein a ratio of mass of the flat pigment particles and total mass of the resin component and the curing agent is 0.5:99.5 to 15:85.

3. The coating composition according to claim 1 or 2, wherein the curing agent is at least one selected from the group consisting of 1-hydroxycyclohexyl phenyl ketone, 2-hydroxy-2-methyl-1-phenylpropan-1-one, 2-methyl-1-(4-methylthiophenyl)-2-morpholinopropan-1-one, 2,4,6-trimethylbenzoyldiphenylphosphine oxide, bis(2,4,6-trimethylbenzoyl)phenylphosphine oxide, 2-(dimethylamino)-2-[(4-methylphenyl)methyl]-1-[4-(4-morpholinyl)phenyl]-1-butanone, α-cumyl peroxyneodecanoate, and 2-methyl-2-[(4-methylphenyl)sulfonyl]-1-[4-(methylthio)phenyl]-1-propanon e.

4. A coating film comprising flat pigment particles, a resin component, and a curing agent, wherein
   the flat pigment particles include a laminate of dielectric layers and a metal thin film layer,
   the dielectric layers and the metal thin film layer are layered alternately in the laminate and the dielectric layers are located outermost in the laminate, and
   the resin component includes at least one selected from the group consisting of tris(2-acryloyloxyethyl) isocyanurate, 2-hydroxyethylbis(2-acryloyloxyethyl) isocyanurate, 1,3,5-triacryloylhexahydro-1,3,5-triazine, and triglycidyl isocyanurate.

5. The coating film according to claim 4, wherein the coating film has a film thickness of 3 $\mu$m to 50 $\mu$m.

6. The coating film according to claim 4 or 5, wherein the curing agent is at least one selected from the group consisting of 1-hydroxycyclohexyl phenyl ketone, 2-hydroxy-2-methyl-1-phenylpropan-1-one, 2-methyl-1-(4-methylthiophenyl)-2-morpholinopropan-1-one, 2,4,6-trimethylbenzoyldiphenylphosphine oxide, bis(2,4,6-trimethylbenzoyl)phenylphosphine oxide, 2-(dimethylamino)-2-[(4-methylphenyl)methyl]-1-[4-(4-morpholinyl)phenyl]-1-butanone, α-cumyl peroxyneodecanoate, and 2-methyl-2-[(4-methylphenyl)sulfonyl]-1-[4-(methylthio)phenyl]-1-propanon e.

# FIG. 1

# FIG. 2

EP 3 689 977 A1

*FIG. 3*

*FIG. 4*

26

# FIG. 5

Laminate formation step

Detachment step

Pulverization step

# FIG. 6

20

Laminate formation step

10

11

12

20(11)

Step of pulverizing
laminate including support

1

## INTERNATIONAL SEARCH REPORT

| | International application No. |
|---|---|
| | PCT/JP2018/034250 |

**A. CLASSIFICATION OF SUBJECT MATTER**
Int.Cl.   C09D4/02(2006.01)i,   C03C17/32(2006.01)i,   C09C1/62(2006.01)i,
          C09D7/62(2018.01)i, C09D163/06(2006.01)i

According to International Patent Classification (IPC) or to both national classification and IPC

**B. FIELDS SEARCHED**

Minimum documentation searched (classification system followed by classification symbols)
Int.Cl.  C09D4/02, C03C17/32, C09C1/62, C09D7/62, C09D163/06

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | CN 102942841 A (LIU, Zhizhao) 27 February 2013, claims, example 4, paragraph [0023] (Family: none) | 1–6 |
| Y | WO 2016/006664 A1 (NIPPON PAINT HOLDINGS CO., LTD.) 14 January 2016, claims, examples, paragraph [0021] & CN 106574129 A & EP 3168266 A1 & SG 11201700175P A & US 2017/0174893 A1, claims, examples, paragraph [0033] | 1–6 |
| A | JP 2011-085235 A (DAIKIN INDUSTRIES, LTD.) 28 April 2011, claims, examples, paragraph [0045] (Family: none) | 1–6 |
| A | CN 106928819 A (ANHUI SUNROAD ENV. MAT. CO., LTD.) 07 July 2017, claims, examples (Family: none) | 1–6 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 05 December 2018 (05.12.2018) | 18 December 2018 (18.12.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016006664 A1
- JP 2002004031 A
- WO 2015111095 A1